# EUROPEAN PATENT APPLICATION

(11) **EP 4 531 263 A1**
(43) Date of publication of application: **02.04.2025**
(21) Application number: 22943535.9
(22) Date of filing: 29.11.2022
(51) Int. Cl.: H02M 7/797, H02M 5/10, H02M 1/32, H02M 7/00, H02J 7/06

(54) **ISOLATED MATRIX CONVERTER AND CONTROL METHOD**

(30) Priority: 23.05.2022 CN 202210565545
(71) Applicant: Sungrow Power Supply Co., Ltd., Hefei, Anhui 230088 (CN)
(72) Inventor: ZHUANG, Jiacai, Hefei, Anhui 230088 (CN); XU, Jun, Hefei, Anhui 230088 (CN); CAI, Guoqing, Hefei, Anhui 230088 (CN); LIU, Wei, Hefei, Anhui 230088 (CN)
(74) Representative: Zacco Norway AS
(86) International application number: PCT/CN2022/135138
(87) International publication number: WO 2023/226348

(57) **Abstract**

Disclosed in the present application are an isolated matrix converter and a control method. The converter comprises bidirectional switch modules, a transformer, a resonant inductor, a resonant capacitor and bridge arm capacitors, a bidirectional switch module and a bridge arm capacitor being connected in series to form a bridge arm of the converter, each bridge arm of the converter comprising at least one bidirectional switch module, the primary winding of the transformer being connected to the resonant inductor and the resonant capacitor in series and then connected to two ends of the bridge arms of the converter, each bidirectional switch module comprising a clamping capacitor and bidirectional switch units, the bidirectional switch units forming two bridge arms of the module, two ends of the clamping capacitor being connected to two ends of the two bridge arms of the module, the clamping capacitor and the two upper bridge arms or two lower bridge arms of the two bridge arms forming a clamping absorption circuit, each bidirectional switch unit comprising at least two controllable switching transistors, and the clamping capacitor inhibiting a voltage spike generated during an action of the switching transistors in the bidirectional switch module. Therefore, the switching transistors are protected and the safety of the whole converter is further protected, improving the reliability of the whole converter.

## Description

The present application claims priority to Chinese Patent Application No.202210565545.1, titled "ISOLATED MATRIX CONVERTER AND CONTROL METHOD", filed on May 23, 2022 with the China National Intellectual Property Administration, which is incorporated herein by reference in its entirety.

### FIELD

The present disclosure relates to the technical field of power electronics, and in particular to an isolated matrix converter and a method for controlling an isolated matrix converter.

### BACKGROUND

An isolated matrix converter generally includes a bidirectional switch and a transformer, and further includes a resonant circuit at an input end of the transformer. The isolated matrix converter is generally configured to convert alternating current power to either alternating current power or to direct current power. For example, the alternating current power is inputted and the direct current power is outputted.

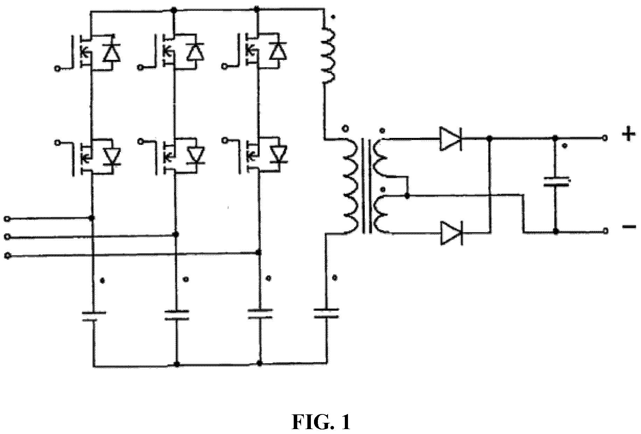

Reference is made to FIG. 1, which is a schematic diagram of an isolated matrix converter according to the conventional technology.

As shown in FIG. 1, three-phase alternating current power is inputted into the isolated matrix converter. Each phase of the isolated matrix converter includes a bidirectional switch, that is, two switching transistors connected in series each are provided with an anti-parallel diode, and the anti-parallel diodes are arranged in opposite directions, allowing current to flow in two opposite directions. A primary winding of the transformer is connected in series with an inductor and a capacitor to form LLC resonance. However, a voltage of the bidirectional switch in the isolated matrix converter shown in FIG. 1 is clamped by a line voltage of the alternating current power, and the switching transistors may undergo a relatively large switching current in an over-resonant region, and thus a voltage spike may be excessively high, resulting in an overvoltage failure of the switching transistors.

### SUMMARY

In view of the above, an isolated matrix converter and a method for controlling an isolated matrix converter are provided according to embodiments of the present disclosure, to suppress a voltage spike generated in a switching process of the switching transistors, and protect the switching transistors.

An isolated matrix converter is provided according to the present disclosure. The isolated matrix converter includes a bidirectional switching module, a transformer, a resonant inductor, a resonant capacitor and a bridge arm capacitor. The bidirectional switching module is connected in series with the bridge arm capacitor to form a bridge arm of the converter, and each bridge arm of the converter includes the at least one bidirectional switching module. A primary winding of the transformer is connected in series with the resonant inductor and the resonant capacitor to form a branch, and the branch is connected between two terminals of the bridge arm of the converter. The bidirectional switching module includes a clamping capacitor and a bidirectional switching unit. The bidirectional switching unit forms two bridge arms of the module, and two terminals of the clamping capacitor are connected to two terminals of each of the two bridge arms of the module. The clamping capacitor is connected to two upper bridge arms or to two lower bridge arms of the two bridge arms to form a clamping absorption circuit. The bidirectional switching unit includes at least two controllable switching transistors. The clamping capacitor is configured to suppress a voltage spike generated in a switching process of the at least two switching transistors in the bidirectional switching module.

In an embodiment, the bidirectional switching module includes two controllable switching transistors, and the two controllable switching transistors are arranged at the two upper bridge arms or at two lower bridge arms.

In an embodiment, the bidirectional switching module includes four controllable switching transistors: a first switching transistor, a second switching transistor, a third switching transistor and a fourth switching transistor. A first terminal of the first switching transistor and a first terminal of the third switching transistor are connected to a first terminal of the clamping capacitor, a second terminal of the second switching transistor and a second terminal of the fourth switching transistor are connected to a second terminal of the clamping capacitor, a second terminal of the first switching transistor is connected to a first terminal of the second switching transistor, and a second terminal of the third switching transistor is connected to a first terminal of the fourth switching transistor. A common terminal of the first switching transistor and the second switching transistor serves as a first terminal of the bidirectional switching module, and a common terminal of the third switching transistor and the fourth switching transistor serves as a second terminal of the bidirectional switching module.

In an embodiment, the bidirectional switching module includes the following three controllable switching transistors and a diode: a first switching transistor, a second switching transistor, a third switching transistor, and a first diode. The first switching transistor is connected in series with the second switching transistor to form a first bridge arm of the module, and the third switching transistor is connected in series with the first diode to form a second bridge arm of the module.

In an embodiment, the bidirectional switching module includes the following two controllable switching transistors and two diodes: a first switching transistor and a second switching transistor, a first diode and a second diode. The first switching transistor is connected in series with the first diode to form a first bridge arm of the module, and the second switching transistor connected in series with the second diode to form a second bridge arm of the module.

In an embodiment, the isolated matrix converter includes at least two bidirectional switching modules connected in series. The converter further includes a controller. The controller is configured to control the controllable switching transistors in the bidirectional switching unit to operate to discharge the clamping capacitor if a voltage of the clamping capacitor is greater than a first preset voltage, until the voltage of the clamping capacitor is less than a second preset voltage, to achieve a voltage balance among the at least two bidirectional switching modules. The first preset voltage is greater than the second preset voltage.

In an embodiment, the converter includes at least two bidirectional switching modules connected in series. The converter further includes a controller. The controller is configured to control the controllable switching transistors in the bidirectional switching unit to operate to charge the clamping capacitor if a voltage of the clamping capacitor is less than a third preset voltage, until the voltage of the clamping capacitor is greater than a fourth preset voltage, to achieve a voltage balance among the at least two bidirectional switching modules. The third preset voltage is less than the fourth preset voltage.

In an embodiment, the isolated matrix converter is a three-phase isolated matrix converter, and each phase of the three-phase isolated matrix converter includes the at least one bidirectional switching module. The converter further includes a controller configured to: control a switching transistor bearing no voltage stress in a maximum phase to be always on, where the maximum phase has a maximum absolute value of a voltage; and control a switching transistor bearing a voltage stress in the maximum phase to operate at a preset duty ratio. The controller is further configured to: turn on a switching transistor in a sub-maximum phase before a bidirectional switching module in the maximum phase is turned off, where the sub-maximum phase has an intermediate absolute value of a voltage, and the switching transistor bears no voltage stress when the switching transistor in the maximum phase is turned on, and turn on a switching transistor bearing a voltage stress in the sub-maximum phase after the bidirectional switching module in the maximum phase is turned off. The controller is further configured to turn on a switching transistor in a minimum phase before a bidirectional switching module in the sub-maximum phase is turned off, where the minimum phase has a minimum absolute value of a voltage, and the switching transistor bears no voltage stress when the bidirectional switching module in the sub-maximum phase is turned on; and turn on a switching transistor bearing a voltage stress in the minimum phase after the bidirectional switching module in the sub-maximum phase is turned off.

In an embodiment, the number of the bidirectional switching unit in the each bridge arm of the converter is more than one, and the more than one bidirectional switching unit is connected in series.

In an embodiment, a secondary winding of the transformer is connected to a rectifier bridge, and the rectifier bridge includes at least one of a diode or a controllable switching transistor.

In an embodiment, the transformer includes multiple secondary windings, and each of the multiple secondary windings is connected to a corresponding rectifier bridge.

A method for controlling an isolated matrix converter is further provided according to the present disclosure. The isolated matrix converter includes a bidirectional switching module, a transformer, a resonant inductor, a resonant capacitor and a bridge arm capacitor. The bidirectional switching module is connected in series with the bridge arm capacitor to form a bridge arm of the converter, and each bridge arm of the converter includes at least one bidirectional switching module. A primary winding of the transformer is connected in series with the resonant inductor and the resonant capacitor to form a branch, and the branch is connected between two terminals of the bridge arm of the converter. The bidirectional switching module includes a clamping capacitor and a bidirectional switching unit. The bidirectional switching unit forms two bridge arms of the module, and two terminals of the clamping capacitor are connected to two terminals of each of the two bridge arms of the module. The clamping capacitor is connected to two upper bridge arms or to two lower bridge arms of the two bridge arms to form a clamping absorption circuit. The bidirectional switching unit includes at least two controllable switching transistors. The method includes: controlling the switching transistors in the bidirectional switching module to operate; and controlling the clamping capacitor to suppress a voltage spike generated in a switching process of the switching transistors in the bidirectional switching module.

In an embodiment, the bidirectional switching module includes two controllable switching transistors, and the two controllable switching transistors are arranged at the two upper bridge arms or at the two lower bridge arms.

In an embodiment, the bidirectional switching module includes four controllable switching transistors: a first switching transistor, a second switching transistor, a third switching transistor and a fourth switching transistor. A first terminal of the first switching transistor and a first terminal of the third switching transistor are connected to a first terminal of the clamping capacitor, a second terminal of the second switching transistor and a second terminal of the fourth switching transistor are connected to a second terminal of the clamping capacitor, a second terminal of the first switching transistor is connected to a first terminal of the second switching transistor, and a second terminal of the third switching transistor is connected to a first terminal of the fourth switching transistor. A common terminal of the first switching transistor and the second switching transistor serves as a first terminal of the bidirectional switching module, and a common terminal of the third switching transistor and the fourth switching transistor serves as a second terminal of the bidirectional switching module.

In an embodiment, the converter includes at least two bidirectional switching modules connected in series. The method for controlling the isolated matrix converter further includes: controlling the controllable switching transistors in the bidirectional switching unit to operate to discharge the clamping capacitor if a voltage of the clamping capacitor is greater than a first preset voltage, until the voltage of the clamping capacitor is less than the second preset voltage, to achieve a voltage balance among the at least two bidirectional switching modules. The first preset voltage is greater than the second preset voltage.

In an embodiment, the converter includes at least two bidirectional switching modules connected in series. The method for controlling the isolated matrix converter further includes: controlling the controllable switching transistors in the bidirectional switching unit to operate to charge the clamping capacitor if a voltage of the clamping capacitor is less than a third preset voltage, until the voltage of the clamping capacitor is greater than a fourth preset voltage, to achieve a voltage balance among the at least two bidirectional switching modules. The third preset voltage is less than the fourth preset voltage.

In an embodiment, the isolated matrix converter is a three-phase isolated matrix converter, and each phase of the three-phase isolated matrix converter includes the at least one bidirectional switching module. The method for controlling the isolated matrix converter further includes: controlling a switching transistor bearing no voltage stress in a maximum phase to be always on, where the maximum phase has a maximum absolute value of a voltage; and controlling a switching transistor bearing a voltage stress in the maximum phase to operate at a preset duty ratio; turning on a switching transistor in a sub-maximum phase before a bidirectional switching module in the maximum phase is turned off, where the sub-maximum phase has an intermediate absolute value of a voltage, and the switching transistor bears no voltage stress when the switching transistor in the maximum phase is turned on, and turning on a switching transistor bearing a voltage stress in the sub-maximum phase after the bidirectional switching module in the maximum phase is turned off; and turning on a switching transistor in a minimum phase before a bidirectional switching module in the sub-maximum phase is turned off, where the minimum phase has a minimum absolute value of a voltage, and the switching transistor bears no voltage stress when the bidirectional switching module in the sub-maximum phase is turned on; and turning on a switching transistor bearing a voltage stress in the minimum phase after the bidirectional switching module in the sub-maximum phase is turned off.

It can be seen that the embodiments of the present disclosure have the following beneficial effects.

The isolated matrix converter includes the bidirectional switching module, the bidirectional switching module includes the clamping capacitor and the bidirectional switching unit, the bidirectional switching unit forms two bridge arms of the module, and two terminals of the clamping capacitor are connected to two terminals of each of the two bridge arms of the module. The clamping capacitor is connected to two upper bridge arms or to two lower bridge arms of the two bridge arms to form the clamping absorption circuit. The bidirectional switching unit includes at least two controllable switching transistors. The clamping capacitor is configured to suppress the voltage spike generated in the switching process of the switching transistor, protecting the switching transistor, thus protecting the security of the whole converter and improving the reliability of the whole converter.

### BRIEF DESCRIPTION OF THE DRAWINGS

FIG. 1 is a schematic diagram of an isolated matrix converter according to the conventional technology;
FIG. 2 is a schematic diagram of an isolated matrix converter according to an embodiment of the present disclosure;
FIG. 3 is a schematic diagram of an isolated matrix converter according to another embodiment of the present disclosure;
FIG. 4 is a schematic diagram of a bidirectional switching module according to another embodiment of the present disclosure;
FIG. 5 is a schematic diagram of a bidirectional switching module according to another embodiment of the present disclosure;
FIG. 6 is a schematic diagram of a bidirectional switching module according to another embodiment of the present disclosure;
FIG. 7 is a schematic diagram of a bidirectional switching module according to another embodiment of the present disclosure;
FIG. 8 is a schematic diagram of an isolated matrix converter according to another embodiment of the present disclosure;
FIG. 9 is a schematic diagram of an isolated matrix converter according to another embodiment of the present disclosure;
FIG. 10 is a waveform diagram of a three-phase alternating current voltage according to an embodiment of the present disclosure;
FIG. 11 is a driving timing diagram of a bidirectional switching module of an isolated matrix converter according to an embodiment of the present disclosure;
FIG. 12A to FIG. 12D are schematic diagrams of an operation principle of switching transistors in a bidirectional switching module according to an embodiment of the present disclosure;
FIG. 13 is a schematic diagram of a voltage stress during a turn-off process of Q4 according to an embodiment of the present disclosure; and
FIG. 14 is a flowchart of a method for controlling an isolated matrix converter according to an embodiment of the present disclosure.

### DETAILED DESCRIPTION

In order to enable those skilled in the art to better understand the technical solutions according to the present disclosure, the application scenarios are introduced first hereinafter.

An isolated matrix converter according to embodiments of the present disclosure may serve as a direct current-alternating current-direct current converter or an alternating current-alternating current-direct current converter. That is, either direct current power or alternating current power is inputted, and direct current power is usually outputted. In addition, either three-phase power or single-phase power is inputted, and single-phase power is outputted, that is, direct current power is supplied to the load.

The application scenario of the isolated matrix converter according to the embodiments of the present disclosure is not limited. For example, a transformer of the isolated matrix converter includes multiple secondary windings, and each of the multiple secondary windings is connected to a rectifier bridge. An output end of each rectifier bridge may be connected to a load, such as charging an electric vehicle. That is, the isolated matrix converter is applied to a charging pile scenario, and each output end may be connected to a charging gun for performing direct current charging on the electric vehicle.

Furthermore, the isolated matrix converter may further supply power to other electrical devices, such as supply power to a computer room, e.g., a server.

Furthermore, in a case that the rectifier bridge connected to the secondary winding of the transformer of the isolated matrix converter includes a controllable switching transistor, the isolated matrix converter may serve as a bidirectional converter. That is, energy can flow in both two directions, for example, direct current power is converted to alternating current power, or alternating current power is converted to direct current power.

### Converter Embodiment

Hereinafter, the isolated matrix converter according to embodiments of the present disclosure is introduced in detail in conjunction with the drawings, and the following description takes three-phase alternating current power being inputted as an embodiment.

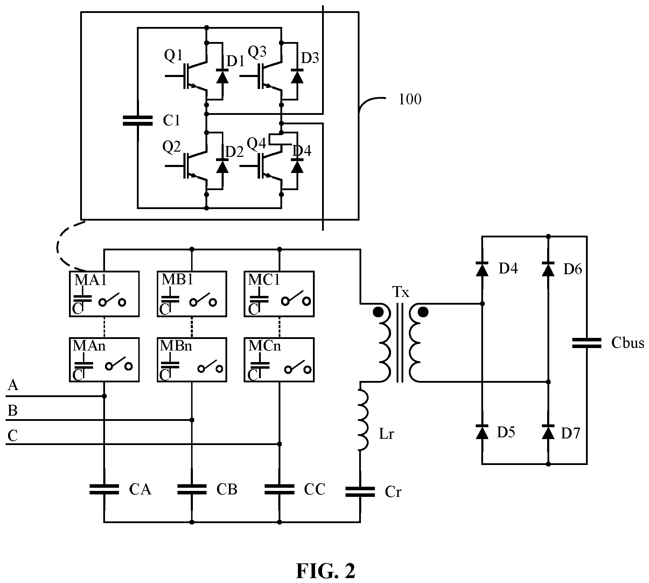

Reference is made to FIG. 2, which is a schematic diagram of an isolated matrix converter according to an embodiment of the present disclosure.

The isolated matrix converter according to the embodiment includes a bidirectional switching module 100, a transformer Tx, a resonant inductor Lr, a resonant capacitor Cr and a bridge arm capacitor. As shown in FIG. 2, for example, the three-phase alternating current power is inputted, and corresponds to a three-phase bridge arm. An A-phase bridge arm is provided with a capacitor CA, a B-phase bridge arm is provided with a capacitor CB, and a C-phase bridge arm is provided with a capacitor CC.

The bidirectional switching module 100 is connected in series with the bridge arm capacitor to form a bridge arm of the converter. Each bridge arm of the isolated matrix converter includes at least one bidirectional switching module. The number of the bidirectional switching module 100 included in each phase bridge arm is not limited in the embodiment of the present disclosure. In FIG. 2, each phase bridge arm includes multiple bidirectional switching modules 100 connected in series. For example, the A-phase bridge arm includes n bidirectional switching modules MA1 to Man. Similarly, the B-phase bridge arm includes n bidirectional switching modules MB1 to MBn, and the C-phase bridge arm includes n bidirectional switching modules MC1 to MCn, where n is an integer greater than or equal to 1.

The bidirectional switching module is arranged on an upper half of each phase bridge arm in the isolated matrix converter, and a bridge arm capacitor is arranged on a lower half of the bridge arm. The bidirectional switching module is connected in series with the bridge arm capacitor to form a whole single-phase bridge arm.

A primary winding of the transformer is connected in series with the resonant inductor Lr and the resonant capacitor Cr to form a branch, and the branch is connected between two terminals of the bridge arm of the isolated matrix converter. The primary winding of the transformer is connected in series with the resonant inductor Lr and the resonant capacitor Cr to form LLC series resonance.

The bidirectional switching module includes a clamping capacitor and a bidirectional switching unit. The bidirectional switching unit forms two bridge arms of the module. Two terminals of the clamping capacitor are connected to two terminals of each of the two bridge arms of the module. The clamping capacitor is connected to two upper bridge arms or to two lower bridge arms of the two bridge arms to form a clamping absorption circuit. The bidirectional switching unit includes at least two controllable switching transistors.

The clamping capacitor is configured to suppress a voltage spike generated in a switching process of the switching transistors in the bidirectional switching module.

The bidirectional switching module in the isolated matrix converter according to the embodiment of the present disclosure includes at least two controllable switching transistors. That is, the bidirectional switching module may include four, three or two controllable switching transistors. The bidirectional switching module including only one controllable switching transistor fails to charge and discharge the clamping capacitor. In a case that the bidirectional switching module includes two controllable switching transistors, both the two controllable switching transistors are arranged at the two upper bridge arms or at the two lower bridge arms.

FIG. 2 illustrates an example that the bidirectional switching module includes the following four controllable switching transistors: a first switching transistor Q1, a second switching transistor Q2, a third switching transistor Q3 and a fourth switching transistor Q4. Each of the switching transistors includes an anti-parallel diode, in order to provide a freewheeling path. That is, the first switching transistor Q1 includes an anti-parallel diode D1, the second switching transistor Q2 includes an anti-parallel diode D2, the third switching transistor Q3 includes an anti-parallel diode D3, and the fourth switching transistor Q4 includes an anti-parallel diode D4.

A first terminal of the first switching transistor Q1 and a first terminal of the third switching transistor Q3 are connected to a first terminal of the clamping capacitor C1. A second terminal of the second switching transistor Q2 and a second terminal of the fourth switching transistor Q4 are connected to a second terminal of the clamping capacitor C1. A second terminal of the first switching transistor Q1 is connected to a first terminal of the second switching transistor Q2. A second terminal of the third switching transistor Q3 is connected to a first terminal of the fourth switching transistor Q4.

A common terminal of the first switching transistor Q1 and the second switching transistor Q2 serves as a first terminal of the bidirectional switching module, and a common terminal of the third switching transistor Q3 and the fourth switching transistor Q4 serves as a second terminal of the bidirectional switching module.

In FIG. 2, for example, an output end of the isolated matrix converter is connected to a full-bridge rectifier bridge, and the rectifier bridge includes four diodes: a fourth diode D4, a fifth diode D5, a sixth diode D6, and a seventh diode D7. The fourth diode D4 is connected in series with the fifth diode D5 to form a bridge arm of the rectifier bridge. The sixth diode D6 is connected in series with the seventh diode D7 to form another bridge arm of the rectifier bridge. An output end of the rectifier bridge is connected to an output capacitor Cbus.

FIG. 2 only schematically illustrates that the rectifier bridge includes the diodes. In another embodiment, the rectifier bridge may further include controllable switching transistors, or include both controllable switching transistors and diodes. In a case that the bridge arms of the rectifier bridge include the controllable switching transistors, the isolated matrix converter may implement bidirectional power conversion, that is, direct current power is converted to alternating current power. A side of the rectifier bridge serves as an input end.

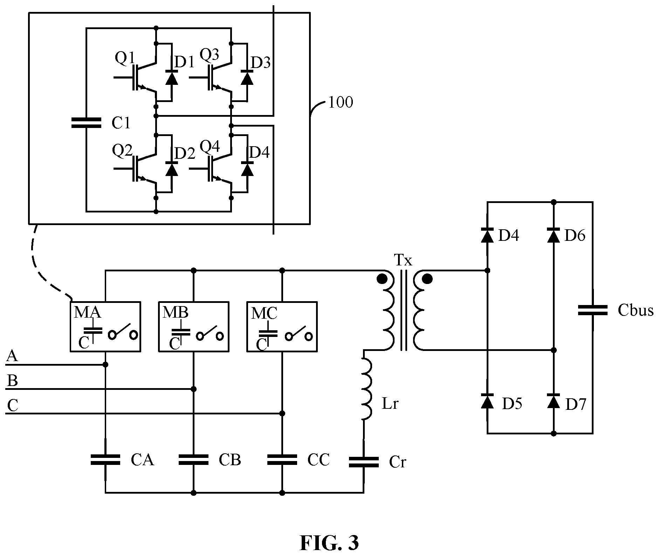

FIG. 3 illustrates an isolated matrix converter in a case that each phase bridge arm shown in FIG. 2 includes one bidirectional switching module, which is a schematic diagram of an isolated matrix converter according to another embodiment of the present disclosure.

In FIG. 3, each phase bridge arm only includes one bidirectional switching module, and the remaining parts are the same as those in FIG. 2, which are not repeated herein.

The bidirectional switching modules in FIG. 2 and FIG. 3 each include controllable switching transistors. Hereinafter, a situation that the bidirectional switching module includes both the controllable switching transistors and the diodes is introduced.

In the isolated matrix converter according to the embodiment of the present disclosure, the bidirectional switching module includes the following two controllable switching transistors and two diodes: a first switching transistor and a second switching transistor, a first diode and a second diode. The first switching transistor is connected in series with the first diode to form a first bridge arm of the module, and the second switching transistor is connected in series with the second diode to form a second bridge arm of the module. The first switching transistor and the second switching transistor represent names of the switching transistors and are not intended to represent positions.

In this embodiment of the present disclosure, the positions of the two diodes are not limited, for example, the two diodes may be located at two upper half bridge arms, or at the two lower half bridge arms.

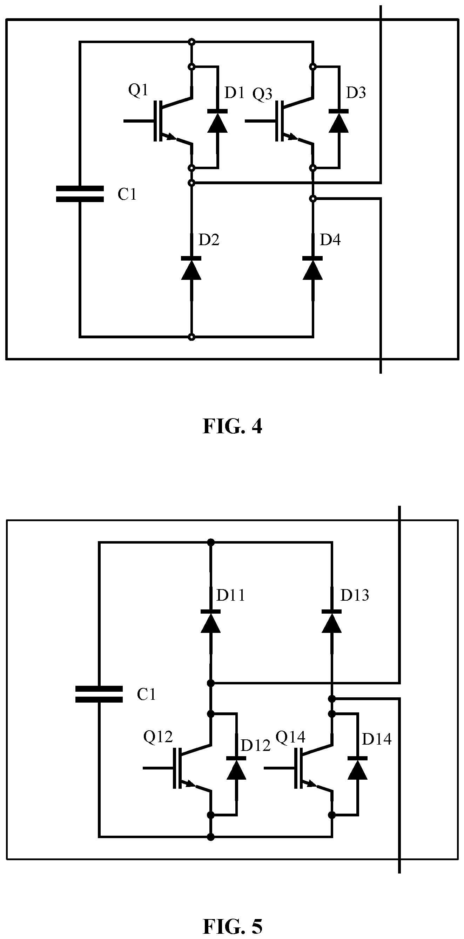

Reference is made to FIG. 4, which is a schematic diagram of a bidirectional switching module according to another embodiment of the present disclosure.

In FIG. 4, the two upper half bridge arms are provided with controllable switching transistors, and the two lower half bridge arms are provided with diodes. That is, both Q1 and Q3 are controllable switching transistors, D2 and D4 are diodes, Q1 includes an anti-parallel diode D1, and Q3 includes an anti-parallel diode D3. The clamping capacitor C1 is connected between two terminals of the bridge arm of the module.

Reference is made to FIG. 5, which is a schematic diagram of a bidirectional switching module according to another embodiment of the present disclosure.

In FIG. 5, two upper half bridge arms each are provided with diodes, and two lower half bridge arms each are provided with controllable switching transistors. That is, Q12 and Q14 are controllable switching transistors, D11 and D13 are diodes, Q12 includes an anti-parallel diode D12, and Q14 includes an anti-parallel diode D14. The clamping capacitor C1 is connected between two terminals of the bridge arm of the module.

FIG. 4 and FIG. 5 illustrate a situation that the bidirectional switching module includes two controllable switching transistors and two diodes. A situation that the bidirectional switching module includes three controllable switching transistors and one diode is introduced in conjunction with the drawings hereinafter. That is, the bidirectional switching module includes the following three controllable switching transistors and one diode: a first switching transistor, a second switching transistor, a third switching transistor and a first diode. The first switching transistor is connected in series with the second switching transistor to form a first bridge arm of the module, and the third switching transistor is connected in series with the first diode to form a second bridge arm of the module.

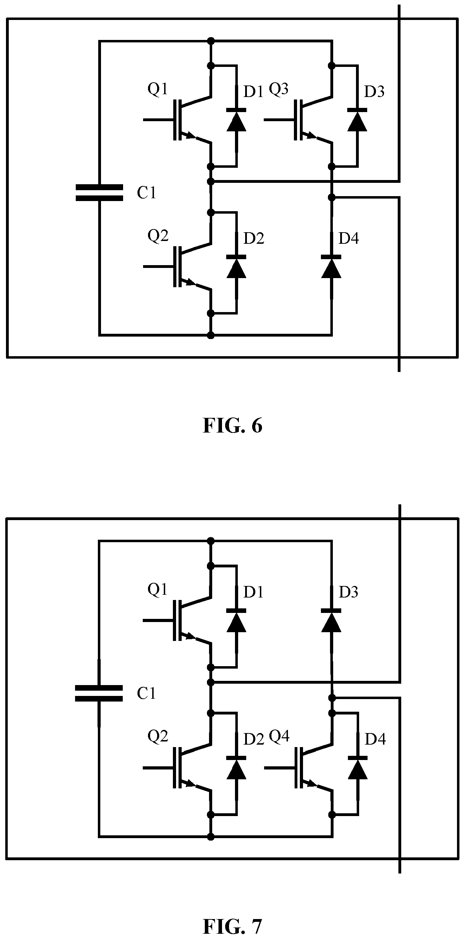

Reference is made to FIG. 6, which is a schematic diagram of a bidirectional switching module according to another embodiment of the present disclosure.

As shown in FIG. 6, a left bridge arm is provided with two controllable switching transistors Q1 and Q2, a right upper half bridge arm is provided with a controllable switching transistor Q3, and a right lower half bridge arm is provided with a diode D4. Q1 includes an anti-parallel diode D1, Q2 includes an anti-parallel diode D2, and Q3 includes an anti-parallel diode D3. The clamping capacitor C1 is connected between two terminals of the bridge arm of the module.

Reference is made to FIG. 7, which is a schematic diagram of a bidirectional switching module according to another embodiment of the present disclosure.

In FIG. 6, a left bridge arm is provided with two controllable switching transistors Q1 and Q2, a right upper half bridge arm is provided with a diode D3, and a right lower half bridge arm is provided with a controllable switching transistor Q4. Q1 includes an anti-parallel diode D1, Q2 includes an anti-parallel diode D2, and Q4 includes an anti-parallel diode D4. The clamping capacitor C1 is connected between two terminals of the bridge arm of the module.

It should be understood that Figures 6 and 7 illustrate an exemplary position of the diode, the diode may be located in any one of the four half bridge arms. In FIG. 6 and FIG. 7, the bidirectional switching modules each include three controllable switching transistors, so that a voltage of each of the bidirectional switching modules is controllable. In an embodiment, the voltage of the bidirectional switching module is regulated by modulating a duty ratio of the controllable switching transistor.

The secondary winding of the transformer is connected to a rectifier bridge. The rectifier bridge includes at least one of the diode or the controllable switching transistor.

As shown in FIG. 3, the rectifier bridge includes diodes, and the transformer includes only one secondary winding. A situation that the transformer includes multiple secondary windings is described hereinafter.

The transformer includes multiple secondary windings, and each of the secondary windings is connected to a corresponding rectifier bridge. The transformer includes multiple secondary windings, and the multiple secondary windings correspond to multiple output ports. A post-stage converter may be arranged to flexibly regulate a voltage and the power from each of the output ports.

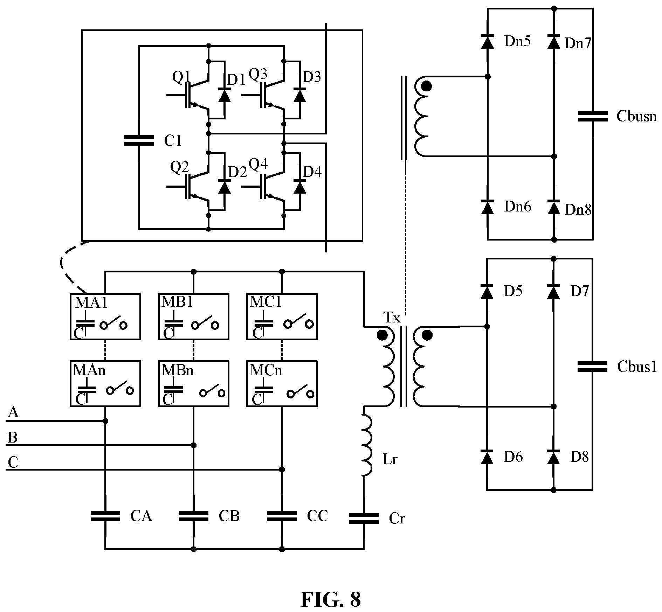

Reference is made to FIG. 8, which is a schematic diagram of an isolated matrix converter according to another embodiment of the present disclosure.

In FIG. 8, the transformer includes n secondary windings, where n is an integer greater than 1, and each of the windings is connected to a corresponding rectifier bridge. For example, a first rectifier bridge includes four diodes D5 to D8, and the first rectifier bridge is connected to an output capacitor Cbus1. An n-th rectifier bridge includes four diodes Dn5 to Dn8, and the n-th rectifier bridge is connected to an output capacitor Cbusn.

The isolated matrix converter shown in FIG. 8 may be applied to a scenario for charging an electric vehicle, where each rectifier bridge corresponds to a charging gun for charging the electric vehicle. For example, an input voltage of the isolated matrix converter may be an alternating current voltage 10kV or an alternating current voltage 35kV.

The above isolated matrix converter is introduced with an example that the rectifier bridge includes the diodes. Hereinafter, a scenario that the rectifier bridge includes controllable switching transistors is described.

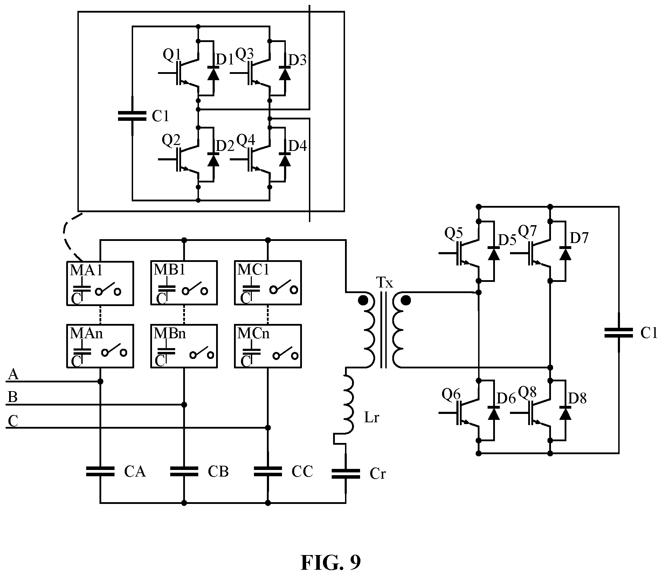

Reference is made to FIG. 9, which is a schematic diagram of an isolated matrix converter according to another embodiment of the present disclosure.

The rectifier bridge in FIG. 9 includes four controllable switching transistors Q5 to Q8, and each of the controllable switching transistors includes a corresponding anti-parallel diode, that is, the controllable switching transistors Q5 to Q8 include anti-parallel diodes D5 to D8, respectively. The rectifier bridge is connected to an output capacitor C1.

In the isolated matrix converter shown in FIG. 9, a right side of the isolated matrix converter is connected to a photovoltaic array, that is, the right side serves as an input end, and a left side of the isolated matrix converter serves as an alternating current output end, so as to implement the alternating current grid connection of photovoltaic power generation.

In this embodiment of the present disclosure, the application scenario of the isolated matrix converter is not limited, the number of the bidirectional switching modules and the number of the rectifier bridge are not limited, and the type of switching transistors in the rectifier bridge and the type of switching transistors in each bidirectional switching module are not limited. The various implementations introduced above may be freely combined with each other.

The operation principle of the isolated matrix converter according to the embodiments of the present disclosure is described in detail hereinafter in conjunction with the drawings. A circuit of the isolated matrix converter is shown in FIG. 3, in which the bidirectional switching module includes controllable switching transistors.

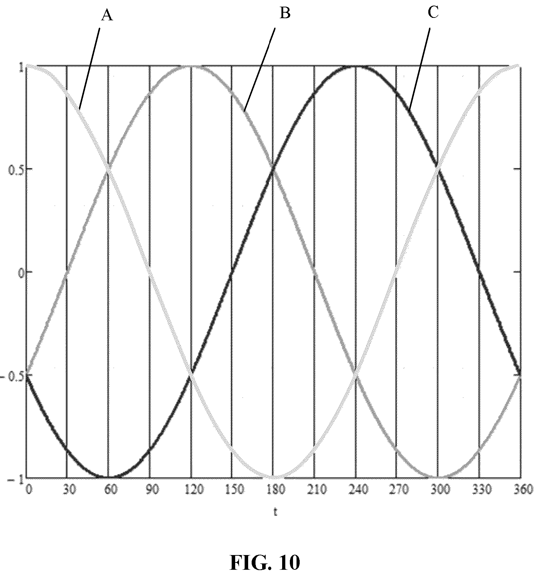

Reference is made to FIG. 10, which is a waveform diagram of a three-phase alternating current voltage according to an embodiment of the present disclosure.

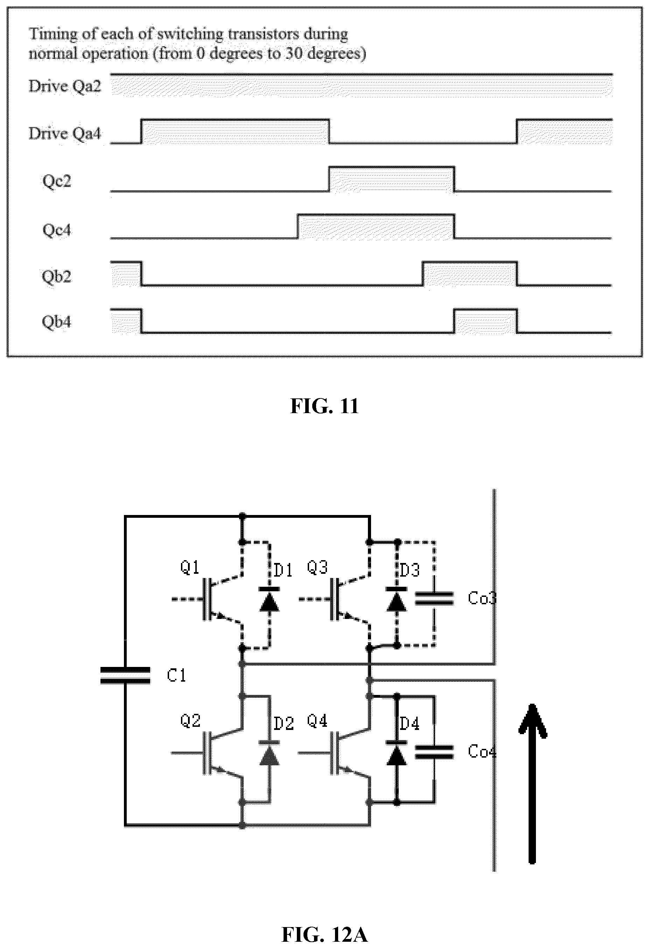

Assuming that a waveform of the three-phase grid voltage is shown in FIG. 10, the A-phase voltage, the B-phase voltage and the C-phase voltage differ by 120 degrees in sequence. From 0 degrees to 30 degrees, an absolute value of the A-phase voltage is greater than an absolute value of the C-phase voltage, and the absolute value of the C-phase voltage is greater than an absolute value of the B-phase voltage, and the A-phase voltage is in the opposite direction to the B-phase voltage and the C-phase voltage. In the circuit shown in FIG. 3, Q2 and Q4 in the bidirectional switching module are main switching transistors, and Q1 and Q3 are turned off. FIG. 11 illustrates switching timing of the switching transistors Q2 and Q4 operating normally.

Reference is made to FIG. 11, which is a driving timing diagram of a bidirectional switching module of an isolated matrix converter according to an embodiment of the present disclosure.

In a case that the isolated matrix converter is a three-phase isolated matrix converter, each phase of the three-phase isolated matrix converter includes at least one bidirectional switching module.

The converter further includes a controller.

For three-phase voltage as shown in FIG. 10, the absolute value of the A-phase voltage is greater than the absolute value of the C-phase voltage, and the absolute value of the C-phase voltage is greater than the absolute value of the B-phase voltage. In FIG. 11, Qa2 represents driving timing of Q2 in the A phase, Qa4 represents driving timing of Q4 in the A phase, Qc2 represents driving timing of Q2 in the C phase, Qc4 represents driving timing of Q4 in the C phase, Qb2 represents driving timing of Q2 in the B phase, and Qb4 represents driving timing of Q4 in the B phase.

The controller is further configured to control a switching transistor bearing no voltage stress in a maximum phase to be always on, where the maximum phase has a maximum absolute value of a voltage; and control a switching transistor bearing a voltage stress in the maximum phase to operate at a preset duty ratio or a preset switching frequency; for example, the duty ratio of 50%.

The controller is further configured to turn on a switching transistor in a sub-maximum phase before a bidirectional switching module in the maximum phase is turned off, where the sub-maximum phase has an intermediate absolute value of a voltage, and the switching transistor bears no voltage stress when the switching transistor in the maximum phase is turned on, and turn on a switching transistor bearing a voltage stress in the sub-maximum phase after the bidirectional switching module in the maximum phase is turned off. In addition, the two switching transistors are turned off simultaneously. A duty ratio of Q4 is an actual duty ratio of the unit, which is determined according to the relationship between a voltage of the phase and the voltage of the maximum phase.

The controller is further configured to turn on a switching transistor in a minimum phase before a bidirectional switching module in the sub-maximum phase is turned off, where the minimum phase has a minimum absolute value of a voltage, and the switching transistor bears no voltage stress when the bidirectional switching module in the sub-maximum phase is turned on; and turn on a switching transistor bearing a voltage stress in the minimum phase after the bidirectional switching module in the sub-maximum phase is turned off. In addition, the two switching transistors are turned off simultaneously. A duty ratio of Q2 is an actual duty ratio of the unit, which is determined according to the relationship between a voltage of the phase and the voltage of the maximum phase.

The positions of the above switching transistors in the bidirectional switching module may be determined according to an actual topological structure. The switching transistors may differ in different bidirectional switching modules. For example, controllable switching transistors in two upper half bridge arms may be different from controllable switching transistors in two lower half bridge arms. Regardless of the structure of the bidirectional switching module, the switching transistors are differentiated into a switching transistor bearing a voltage stress and a switching transistor bearing no voltage stress.

In order to facilitate understanding, the description is introduced with an example that the absolute value of the A-phase voltage is maximum from 0 degrees to 30 degrees with reference to FIG. 10.

The controller is further configured to turn on a second switching transistor Q2 in the maximum phase, and control a fourth switching transistor Q4 in the maximum phase to operate at a preset duty ratio or a preset switching frequency; for example, the preset duty ratio of 50%;
turn on a fourth switching transistor Q4 in the sub-maximum phase before the fourth switching transistor Q4 in the maximum phase is turned off, and turn on a second switching transistor Q2 in the sub-maximum phase after the fourth switching transistor Q4 in the sub-maximum phase is turned off; and
turn on a second switching transistor Q2 in the minimum phase before the second switching transistor Q2 and the fourth switching transistor Q4 in the sub-maximum phase are turned off, and turn on a fourth switching transistor Q4 in the minimum phase after the second switching transistor Q2 and the fourth switching transistor Q4 in the sub-maximum phase are turned off.

Q2 represents the second switching transistor in each phase, and Q4 represents the fourth switching transistor in each phase. The four switching transistors have respective same reference numerals in each phase. The switching transistors with same reference numerals are only different in phase.

In a case that the converter includes at least two bidirectional switching modules connected in series, the controller is configured to control the controllable switching transistors in the bidirectional switching unit to operate to discharge the clamping capacitor if a voltage of the clamping capacitor is greater than a first preset voltage, until the voltage of the clamping capacitor is less than a second preset voltage, to achieve a voltage balance among the at least two bidirectional switching modules, where the first preset voltage is greater than the second preset voltage.

In a case that the converter includes at least two bidirectional switching modules connected in series, the controller is configured to control the controllable switching transistors in the bidirectional switching unit to operate to charge the clamping capacitor if the voltage of the clamping capacitor is less than a third preset voltage, until the voltage of the clamping capacitor is greater than a fourth preset voltage, to achieve a voltage balance among the at least two bidirectional switching modules, where the third preset voltage is less than the fourth preset voltage.

In addition, the second preset voltage is greater than the third preset voltage.

In the embodiment of the present disclosure, in a case that the converter includes at least two bidirectional switching modules connected in series, the controllable switching transistors in the bidirectional switching modules are controlled to operate to charge or discharge the clamping capacitor, thus changing the voltage of the clamping capacitor, so as to achieve a voltage balance among multiple bidirectional switching modules connected in series. Under the voltage balance, voltage stresses of the switching transistors in the multiple bidirectional switching modules are also balanced, avoiding a situation in which the switching transistors in some bidirectional switching modules bear a relatively large voltage stress, and the switching transistors in other bidirectional switching modules bear a relatively small voltage stress, thereby better protecting the switching transistors.

Reference is made to FIG. 12A to FIG. 12D, which are schematic diagrams of an operation principle of switching transistors of a bidirectional switching module according to an embodiment of the present disclosure.

FIG. 12A to FIG. 12D show an operation principle of the clamping capacitor C1 during a turn-off process of Q4 in the A phase from 0 degrees to 30 degrees. During the turn-off process of Q4, a loop parasitic inductance may oscillate to produce a high voltage spike at Q4. The voltage spike is limited to a voltage of C1 due to the presence of C1, that is, the voltage spike is clamped by C1, effectively suppressing the voltage spike.

A voltage across C1 is controlled to be within a reasonable range, in order to ensure that C1 effectively protects the controllable switching transistor. For example, a normal voltage is set to V0, the module enters an overvoltage discharging mode if the voltage is greater than a first preset voltage V1, and the module exits the overvoltage discharging mode if the voltage is less than a second preset voltage V2. The module enters an undervoltage charging mode if the voltage is less than a third preset voltage V3, and the module exits the undervoltage charging mode if the voltage is greater than a fourth preset voltage V4. Hereinafter, the operation process of the clamping capacitor C1 in the charging mode and the discharging mode is introduced if the A-phase voltage is maximum (from 0 degrees to 30 degrees), intermediate (from 30 degrees to 60 degrees) or minimum (from 60 degrees to 90 degrees).

From 0 degrees to 30 degrees, the bidirectional switching module enters a bus undervoltage charging mode if the voltage of the clamping capacitor C1 of the bidirectional switching module in the A phase is less than V2. Under this mode, the switching transistor Q2 that is turned on for a long time period in the module is turned off, and Q4 keeps off when Q4 is to be turned on. Then, a main power loop current charges C1. If the voltage across C1 in the module is greater than V4, Q2 continues to be turned on for a long time period in a next switching cycle, and Q4 operates based on a preset logic. If the voltage of the clamping capacitor C1 in the module is greater than V1, the module enters the bus overvoltage discharging mode. In this mode, the switching transistor Q2 in the module is turned off and Q1 is turned on at a time instant when Q4 is turned on, and the loop current charges C1. In a case that the each phase bridge arm is provided with multiple bidirectional switching modules connected in series, Q1 is turned off and Q2 is turned on at a time instant when Q4 is turned off, in order to reduce the voltage stresses of other modules in the A phase. The clamping capacitor C1 continues to discharge in a next switching cycle, and exits the discharging mode if the voltage of C1 is less than V2.

From 30 degrees to 60 degrees, the module enters the bus undervoltage charging mode if the voltage of the clamping capacitor C1 of the bidirectional switching module in the A phase is less than V3. Under normal operation, Q2 of the module is turned on for a time period before Q4 in the maximum phase is turned off, in order to achieve zero voltage switching of Q4. Under the charging mode, Q2 keeps off, Q4 also keeps off in this cycle, so that the loop current charges the C1. If the charging is uncompleted in this cycle, the charging continues in the next switching cycle until the charging is completed. The module enters the bus overvoltage discharging mode if the voltage of the clamping capacitor C1 of the module is greater than V1, Q2 keeps off, and Q4 is normally turned on, and Q1 is turned on when Q4 is turned on. C1 discharges through the main loop current. The capacitor Cx discharges before the current is reversed.

From 60 degrees to 90 degrees, the module enters the bus undervoltage charging mode if the voltage of the clamping capacitor C1 of the bidirectional switching module in the A phase is less than V3. Under normal operation, Q4 of the module is turned on before the Q2 and Q4 in the intermediate C phase are turned on, in order to achieve zero voltage switching of Q2. Under the charging mode, Q4 and Q2 keep off during the cycle. The module enters the bus overvoltage discharging mode if the voltage of the clamping capacitor C1 in the module is greater than V1, and Q4 is turned on normally. Q1 is turned on instead of Q2 when Q2 is to be turned on normally. Q1 and Q4 are turned off when Q2 and Q4 are to be turned off normally, so as to discharge C1.

A process of C1 suppressing the voltage spike during the turn-off process of Q4 is described in detail as follows.

In FIG. 12A, A-phase current flows into Q4, through Q2 and D2, and outflows from an upper terminal of Q2, and both Q1 and Q3 are turned off in this case.

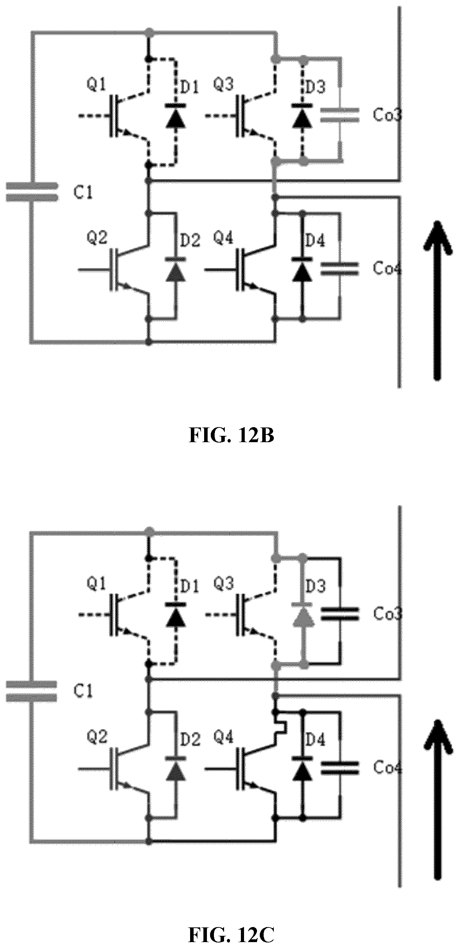

In FIG. 12B, Q4 is turned off, and Q1 and Q3 continue to keep off. Current charges a junction capacitor Co4 of Q4, and a junction capacitor Co3 of Q3 discharges.

In FIG. 12C, Q4 is turned off, and Q1 and Q3 continue to keep off. A voltage formed by the current at the junction capacitor Co4 of Q4 reaches the voltage across the clamping capacitor C1. In this case, D3 is turned on after Co3 completely discharges, thus suppressing the voltage spike of Q4 and protecting the security of Q4.

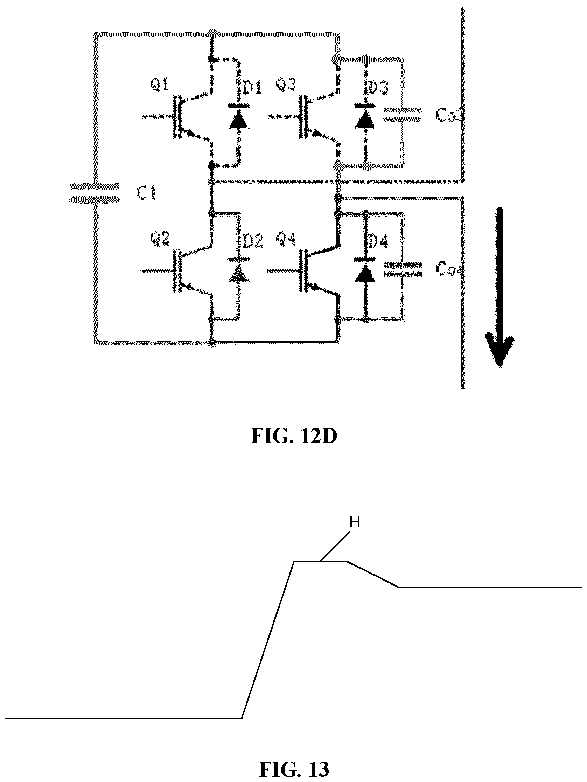

In FIG. 12D, the current is reversed after the current resonates to zero through the parasitic inductor of the loop (that refers to a large loop of the whole isolated matrix converter), D3, C1 and D2, to charge the junction capacitor (Co3) of Q3 and discharge the junction capacitor (Co4) of Q4. A voltage across Q4 decreases and a voltage across Q3 increases until a total voltage of Q4 in all bidirectional switching modules connected in series reaches the line voltage of the inputted alternating current power.

If the bidirectional switching module is not provided with C1, the voltages of Co3 and Co4 are relatively large, and Q3 and Q4 may bear a relatively large voltage stress. The voltage stress exceeding a withstand voltage results in damage to Q3 and Q4.

In order to more clearly understand the suppression of the clamping capacitor in the bidirectional switching module of the isolated matrix converter according to the present disclosure on the voltage spike generated in the switching process of the switching transistors, which is introduced in detail in conjunction with the waveform diagram hereinafter.

Reference is made to FIG. 13, which is a schematic diagram of a voltage stress during the turn-off process of the switching transistor Q4 according to an embodiment of the present disclosure.

It can be seen from FIG. 13 that the voltage stress has a platform H during the turn-off process of Q4 due to the presence of the clamping capacitor C1, that is, the voltage is clamped. If the bidirectional switching module is not provided with C1, a high voltage spike appears during the turn-off process of Q4, affecting Q4. For example, a high voltage spike exceeding the withstand voltage of Q4 results in damage to Q4. Similarly, other switching transistors may also be protected by C1 during the switching process, thus preventing the other switching transistors from being effected by the voltage spike.

The above embodiments are introduced by taking the A phase as an example. The switching process of each switching transistor in other phases for various phase ranges is similar to the A phase, which is not repeated herein.

In a case that the switching transistors in the bidirectional switching module do not belong to a fully-controlled type (that is, including both the controllable switching transistor and the diode), the charging mode and the discharging mode of each bidirectional switching module are only controlled in a preset phase range.

All the above solutions are described with Q2 and Q4 in the bidirectional switching module being main switching transistors. In practice, Q1 and Q3 serve as main switching transistors, and Q2 and Q4 serve as switching transistors for regulating the voltage of the clamping capacitor C1. The relevant timing is modified accordingly, which is not repeated herein.

In the isolated matrix converter according to the embodiment of the present disclosure, the bidirectional switching module includes the clamping capacitor, and the clamping capacitor is configured to suppress the voltage spike generated in the switching process of the switching transistor, so as to protect the switching transistor, thus protecting the security of the whole converter and improving the reliability of the whole converter. In addition, the voltage stress of the converter can be better controlled by controlling the charging mode and discharging mode of the clamping capacitor.

In addition, in the isolated matrix converter according to the embodiment of the present disclosure, each phase may include multiple bidirectional switching modules connected in series, reducing a voltage born by each bidirectional switching module if a bridge arm voltage is relatively high, which is conducive to the selection of the controllable switching transistors in the bidirectional switching module, thus reducing the cost of the converter.

The bidirectional switching module in the above embodiments is introduced in the form of the bridge arm, that is, a two-level topology is introduced as an example. In addition, the bidirectional switching module may further be designed as a three-level full bridge topology such as I-NPC and A-NPC or a multi-level topology.

### Method Embodiment

Based on the isolated matrix converter according to the above embodiments, a method for controlling an isolated matrix converter is further provided according to an embodiment of the present disclosure, the method is described in detail hereinafter in conjunction with the drawings.

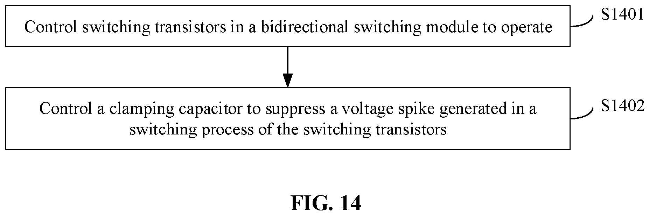

Reference is made to FIG. 14, which is a flowchart of a method for controlling an isolated matrix converter according to an embodiment of the present disclosure.

In the method for controlling the isolated matrix converter according to the embodiment of the present disclosure, the isolated matrix converter includes a bidirectional switching module, a transformer, a resonant inductor, a resonant capacitor and a bridge arm capacitor. The bidirectional switching module is connected in series with the bridge arm capacitor to form a bridge arm of the converter, and each bridge arm of the converter includes at least one bidirectional switching module. A primary winding of the transformer is connected in series with the resonant inductor and the resonant capacitor to form a branch, and the branch is connected between two terminals of the bridge arm of the converter. The bidirectional switching module includes a clamping capacitor and a bidirectional switching unit. The bidirectional switching unit forms two bridge arms of the module, and two terminals of the clamping capacitor are connected to two terminals of each of the two bridge arms of the module. The clamping capacitor is connected to two upper bridge arms or to two lower bridge arms of the two bridge arms to form a clamping absorption circuit. The bidirectional switching unit includes at least two controllable switching transistors.

The method for controlling the isolated matrix converter includes the following steps S1401 and S1402.

In step S1401, the switching transistors in the bidirectional switching module are controlled to operate.

In step S1402, the clamping capacitor is controlled to suppress a voltage spike generated in a switching process of the switching transistors.

With the method for controlling the isolated matrix converter according to the embodiment of the present disclosure, the bidirectional switching module includes the clamping capacitor, and the clamping capacitor is configured to suppress the voltage spike generated in the switching process of the switching transistor, so as to protect the switching transistor, thus protecting the security of the whole converter and improving the reliability of the whole converter.

In a case that the bidirectional switching module includes two controllable switching transistors, the two controllable switching transistors are arranged at the two upper bridge arms or at the two lower bridge arms.

The bidirectional switching module includes the following four controllable switching transistors: a first switching transistor, a second switching transistor, a third switching transistor and a fourth switching transistor. A first terminal of the first switching transistor and a first terminal of the third switching transistor are connected to a first terminal of the clamping capacitor, a second terminal of the second switching transistor and a second terminal of the fourth switching transistor are connected to a second terminal of the clamping capacitor, a second terminal of the first switching transistor is connected to a first terminal of the second switching transistor, and a second terminal of the third switching transistor is connected to a first terminal of the fourth switching transistor. A common terminal of the first switching transistor and the second switching transistor serves as a first terminal of the bidirectional switching module, and a common terminal of the third switching transistor and the fourth switching transistor serves as a second terminal of the bidirectional switching module.

In an embodiment, the converter includes at least two bidirectional switching modules connected in series, and the method for controlling the isolated matrix converter further includes: controlling the controllable switching transistors in the bidirectional switching unit to operate to discharge the clamping capacitor if a voltage of the clamping capacitor is greater than a first preset voltage, until the voltage of the clamping capacitor is less than a second preset voltage, to achieve a voltage balance among the at least two bidirectional switching modules; where the first preset voltage is greater than the second preset voltage. It should be understood that the bidirectional switching module includes at least three switching transistors, in order to control the switching transistors to operate to discharge the clamping capacitor.

In an embodiment, the converter includes at least two bidirectional switching modules connected in series, the method for controlling the isolated matrix converter further includes: controlling the controllable switching transistors in the bidirectional switching unit to operate to charge the clamping capacitor if the voltage of the clamping capacitor is less than a third preset voltage, until the voltage of the clamping capacitor is greater than a fourth preset voltage, to achieve a voltage balance among the at least two bidirectional switching modules, where the third preset voltage is less than the fourth preset voltage.

In addition, the second preset voltage is greater than the third preset voltage.

In the method according to the embodiment of the present disclosure, the converter includes at least two bidirectional switching modules connected in series, the controllable switching transistors in the bidirectional switching modules are controlled to operate to charge or discharge the clamping capacitor, thus changing the voltage of the clamping capacitor, so as to achieve a voltage balance among multiple bidirectional switching modules connected in series. Under the voltage balance, voltage stresses of the switching transistors in the multiple bidirectional switching modules are also balanced, avoiding a situation in which the switching transistors in some bidirectional switching modules bear a relatively large voltage stress, and the switching transistors in other bidirectional switching modules bear a relatively small voltage stress, thereby better protecting the switching transistors.

In an embodiment, the isolated matrix converter is a three-phase isolated matrix converter, each phase of the three-phase isolated matrix converter includes at least one bidirectional switching module, and the method further includes:
controlling a switching transistor bearing no voltage stress in a maximum phase to be always on, where the maximum phase has a maximum absolute value of a voltage; and controlling a switching transistor bearing a voltage stress in the maximum phase to operate at a preset duty ratio;
turning on a switching transistor in a sub-maximum phase before a bidirectional switching module in the maximum phase is turned off, where the sub-maximum phase has an intermediate absolute value of a voltage, and the switching transistor bears no voltage stress when the switching transistor in the maximum phase is turned on, and turning on a switching transistor bearing a voltage stress in the sub-maximum phase after the bidirectional switching module in the maximum phase is turned off; and
turning on a switching transistor in a minimum phase before a bidirectional switching module in the sub-maximum phase is turned off, where the minimum phase has a minimum absolute value of a voltage, the switching transistor bears no voltage stress when the bidirectional switching module in the sub-maximum phase is turned on; and turning on a switching transistor bearing a voltage stress in the minimum phase after the bidirectional switching module in the sub-maximum phase is turned off.

With the above description of the disclosed embodiments, those skilled in the art can implement or use the present disclosure. It is obvious for those skilled in the art to make multiple modifications to these embodiments. The general principle defined herein may be applied to other embodiments without departing from the spirit or scope of the present disclosure. Therefore, the present disclosure shall not be limited to the embodiments described herein but have the widest scope that complies with the principle and novelty disclosed in this specification.

## Claims

1. An isolated matrix converter, comprising:
a bidirectional switching module;
a transformer;
a resonant inductor;
a resonant capacitor; and
a bridge arm capacitor, wherein
the bidirectional switching module is connected in series with the bridge arm capacitor to form a bridge arm of the converter, and each bridge arm of the converter comprises the at least one bidirectional switching module;
a primary winding of the transformer is connected in series with the resonant inductor and the resonant capacitor to form a branch, and the branch is connected between two terminals of the bridge arm of the converter;
the bidirectional switching module comprises a clamping capacitor and a bidirectional switching unit, wherein the bidirectional switching unit forms two bridge arms of the module, and two terminals of the clamping capacitor are connected to two terminals of each of the two bridge arms of the module, wherein the clamping capacitor is connected to two upper bridge arms or to two lower bridge arms of the two bridge arms to form a clamping absorption circuit, and wherein the bidirectional switching unit comprises at least two controllable switching transistors; and
the clamping capacitor is configured to suppress a voltage spike generated in a switching process of the at least two controllable switching transistors in the bidirectional switching module.

2. The converter according to claim 1, wherein the bidirectional switching module comprises two controllable switching transistors, and the two controllable switching transistors are arranged at the two upper bridge arms or at the two lower bridge arms.

3. The converter according to claim 2, wherein the bidirectional switching module comprises the following four controllable switching transistors: a first switching transistor, a second switching transistor, a third switching transistor and a fourth switching transistor;
wherein a first terminal of the first switching transistor and a first terminal of the third switching transistor are connected to a first terminal of the clamping capacitor, a second terminal of the second switching transistor and a second terminal of the fourth switching transistor are connected to a second terminal of the clamping capacitor, a second terminal of the first switching transistor is connected to a first terminal of the second switching transistor, and a second terminal of the third switching transistor is connected to a first terminal of the fourth switching transistor; and
a common terminal of the first switching transistor and the second switching transistor serves as a first terminal of the bidirectional switching module, and a common terminal of the third switching transistor and the fourth switching transistor serves as a second terminal of the bidirectional switching module.

4. The converter according to claim 2, wherein the bidirectional switching module comprises the following three controllable switching transistors and a diode: a first switching transistor, a second switching transistor, a third switching transistor, and a first diode,
wherein the first switching transistor is connected in series with the second switching transistor to form a first bridge arm of the module, and the third switching transistor is connected in series with the first diode to form a second bridge arm of the module.

5. The converter according to claim 2, wherein the bidirectional switching module comprises the following two controllable switching transistors and two diodes: a first switching transistor and a second switching transistor, a first diode and a second diode,
wherein the first switching transistor is connected in series with the first diode to form a first bridge arm of the module, and the second switching transistor connected in series with the second diode to form a second bridge arm of the module.

6. The converter according to any one of claims 1 to 4, comprising at least two bidirectional switching modules connected in series,
wherein the converter further comprises a controller, configured to:
control the controllable switching transistors in the bidirectional switching unit to operate to discharge the clamping capacitor if a voltage of the clamping capacitor is greater than a first preset voltage, until the voltage of the clamping capacitor is less than a second preset voltage, to achieve a voltage balance among the at least two bidirectional switching modules, wherein the first preset voltage is greater than the second preset voltage.

7. The converter according to any one of claims 1 to 5, comprising at least two bidirectional switching modules connected in series,
wherein the converter further comprises a controller, configured to:
control the controllable switching transistors in the bidirectional switching unit to operate to charge the clamping capacitor if a voltage of the clamping capacitor is less than a third preset voltage, until the voltage of the clamping capacitor is greater than a fourth preset voltage, to achieve a voltage balance among the at least two bidirectional switching modules, wherein the third preset voltage is less than the fourth preset voltage.

8. The converter according to any one of claims 2 to 5, wherein the isolated matrix converter is a three-phase isolated matrix converter, and each phase of the three-phase isolated matrix converter comprises the at least one bidirectional switching module;
wherein the converter further comprises a controller, configured to:
control a switching transistor bearing no voltage stress in a maximum phase to be always on, wherein the maximum phase has a maximum absolute value of a voltage; and control a switching transistor bearing a voltage stress in the maximum phase to operate at a preset duty ratio;
turn on a switching transistor in a sub-maximum phase before a bidirectional switching module in the maximum phase is turned off, wherein the sub-maximum phase has an intermediate absolute value of a voltage, and the switching transistor bears no voltage stress when the switching transistor in the maximum phase is turned on, and turn on a switching transistor bearing a voltage stress in the sub-maximum phase after the bidirectional switching module in the maximum phase is turned off; and
turn on a switching transistor in a minimum phase before a bidirectional switching module in the sub-maximum phase is turned off, wherein the minimum phase has a minimum absolute value of a voltage, and the switching transistor bears no voltage stress when the bidirectional switching module in the sub-maximum phase is turned on; and turn on a switching transistor bearing a voltage stress in the minimum phase after the bidirectional switching module in the sub-maximum phase is turned off.

9. The converter according to any one of claims 1 to 7, wherein the number of the bidirectional switching unit in the each bridge arm of the converter is more than one, and the more than one bidirectional switching unit is connected in series.

10. The converter according to any one of claims 1 to 7, wherein a secondary winding of the transformer is connected to a rectifier bridge, and the rectifier bridge comprises at least one of a diode or a controllable switching transistor.

11. The converter according to claim 9, wherein the transformer comprises a plurality of secondary windings, and each of the plurality of secondary windings is connected to a corresponding rectifier bridge.

12. A method for controlling an isolated matrix converter, wherein the isolated matrix converter comprises:
a bidirectional switching module;
a transformer;
a resonant inductor;
a resonant capacitor; and
a bridge arm capacitor;
wherein the bidirectional switching module is connected in series with the bridge arm capacitor to form a bridge arm of the converter, and each bridge arm of the converter comprises the at least one bidirectional switching module;
a primary winding of the transformer is connected in series with the resonant inductor and the resonant capacitor to form a branch, and the branch is connected between two terminals of the bridge arm of the converter;
the bidirectional switching module comprises a clamping capacitor and a bidirectional switching unit, wherein the bidirectional switching unit forms two bridge arms of the module, and two terminals of the clamping capacitor are connected to two terminals of each of the two bridge arms of the module, wherein the clamping capacitor is connected to two upper bridge arms or to two lower bridge arms of the two bridge arms to form a clamping absorption circuit, and wherein the bidirectional switching unit comprises at least two controllable switching transistors,
wherein the method for controlling the isolated matrix converter comprises:
controlling the switching transistors in the bidirectional switching module to operate; and
controlling the clamping capacitor to suppress a voltage spike generated in a switching process of the switching transistors in the bidirectional switching module.

13. The method according to claim 12, wherein the bidirectional switching module comprises two controllable switching transistors, and the two controllable switching transistors are arranged at the two upper bridge arms or at the two lower bridge arms.

14. The method according to claim 13, wherein the bidirectional switching module comprises four controllable switching transistors: a first switching transistor, a second switching transistor, a third switching transistor and a fourth switching transistor;
wherein a first terminal of the first switching transistor and a first terminal of the third switching transistor are connected to a first terminal of the clamping capacitor, a second terminal of the second switching transistor and a second terminal of the fourth switching transistor are connected to a second terminal of the clamping capacitor, a second terminal of the first switching transistor is connected to a first terminal of the second switching transistor, and a second terminal of the third switching transistor is connected to a first terminal of the fourth switching transistor; and
a common terminal of the first switching transistor and the second switching transistor serves as a first terminal of the bidirectional switching module, and a common terminal of the third switching transistor and the fourth switching transistor serves as a second terminal of the bidirectional switching module.

15. The method according to any one of claims 12 to 13, wherein the converter comprises at least two bidirectional switching modules connected in series, and the method for controlling the isolated matrix converter further comprises:
controlling the controllable switching transistors in the bidirectional switching unit to operate to discharge the clamping capacitor if a voltage of the clamping capacitor is greater than a first preset voltage, until the voltage of the clamping capacitor is less than the second preset voltage, to achieve a voltage balance among the at least two bidirectional switching modules, wherein the first preset voltage is greater than the second preset voltage.

16. The method according to claim 13 or claim 14, wherein the converter comprises at least two bidirectional switching modules connected in series, and the method for controlling the isolated matrix converter further comprises:
controlling the controllable switching transistors in the bidirectional switching unit to operate to charge the clamping capacitor if a voltage of the clamping capacitor is less than a third preset voltage, until the voltage of the clamping capacitor is greater than a fourth preset voltage, to achieve a voltage balance among the at least two bidirectional switching modules, wherein the third preset voltage is less than the fourth preset voltage.

17. The method according to claim 13, wherein the isolated matrix converter is a three-phase isolated matrix converter, and each phase of the three-phase isolated matrix converter comprises at least one bidirectional switching module;
wherein the method for controlling the isolated matrix converter further comprises:
controlling a switching transistor bearing no voltage stress in a maximum phase to be always on, wherein the maximum phase has a maximum absolute value of a voltage; and controlling a switching transistor bearing a voltage stress in the maximum phase to operate at a preset duty ratio;
turning on a switching transistor in a sub-maximum phase before a bidirectional switching module in the maximum phase is turned off, wherein the sub-maximum phase has an intermediate absolute value of a voltage, and the switching transistor bears no voltage stress when the switching transistor in the maximum phase is turned on, and turning on a switching transistor bearing a voltage stress in the sub-maximum phase after the bidirectional switching module in the maximum phase is turned off; and
turning on a switching transistor in a minimum phase before a bidirectional switching module in the sub-maximum phase is turned off, wherein the minimum phase has a minimum absolute value of a voltage, and the switching transistor bears no voltage stress when the bidirectional switching module in the sub-maximum phase is turned on; and turning on a switching transistor bearing a voltage stress in the minimum phase after the bidirectional switching module in the sub-maximum phase is turned off.
